Europäisches Patentamt

European Patent Office

Office européen des brevets

(11) Veröffentlichungsnummer: **0 446 606 A2**

## (12) EUROPÄISCHE PATENTANMELDUNG

(21) Anmeldenummer: **91101572.5**

(22) Anmeldetag: **06.02.91**

(51) Int. Cl.$^5$: **G01F 15/08**

(30) Priorität: **13.03.90 DE 4007914**

(43) Veröffentlichungstag der Anmeldung:
**18.09.91 Patentblatt 91/38**

(84) Benannte Vertragsstaaten:
**AT BE CH DE FR IT LI LU**

(71) Anmelder: **JANSKY GMBH**
**Taubenstrasse 33-43**

**W-4407 Emsdetten(DE)**

(72) Erfinder: **Jansky, Manfred, Dipl.-Ing.**
**Taubenstrasse 37**
**W-4407 Emsdetten(DE)**

(74) Vertreter: **Cohausz & Florack Patentanwälte**
**Postfach 14 01 61 Schumannstrasse 97**
**W-4000 Düsseldorf 1(DE)**

(54) **Luftabscheider in einer Messanlage für Milch, insbesondere für einen Milchsammelwagen.**

(57) Die Erfindung bezieht sich auf einen Luftabscheider in einer Meßanlage für Milch, insbesondere für einen Milchsammelwagen. Der Luftabscheider besteht aus einem Behälter 6a,6b mit einem in der Nähe seines Bodens angeordneten Auslauf 4 und zwei weit oberhalb des Bodens angeordneten, gegeneinander höhenversetzten Einläufen 12a,12b. Die mit Steuerventilen 12c,12d versehenen Einläufe werden von einer Steuereinrichtung mit einem Niveaustandsfühler 13 derart angesteuert, daß die Milch über den Einlauf 12a,12b zufließt, der von dem Niveau der in dem Behälter 6a,6b befindlichen Milch den geringsten Abstand hat. Vorzugsweise hat der Behälter 6a,6b im Bereich des oberen tangential einmündenden Einlaufs 12b einen wesentlich kleineren kreisförmigen Querschnitt als im Bereich des unteren Einlaufs 12a.

Fig. 2

Die Erfindung bezieht sich auf einen Luftabscheider in einer Meßanlage für Milch, insbesondere für einen Milchsammelwagen, bestehend aus einem Behälter mit einem weit oberhalb seines Bodens angeordneten Einlauf und einem zumindest in der Nähe seines Bodens angeordneten Auslauf.

Luftabscheider dieser Art sind bekannt. Sie dienen dazu, die die Luft, die bei der Übernahme von Milch des Lieferanten unter die Milch gemischt wird, aus der Milch wieder zu entfernen, bevor die Milch einer Meßeinrichtung (Volumenzähler) zugeführt wird. Würde die Milch mit den Lufteinschlüssen der Meßeinrichtung zugeführt, dann würde ein durch das Volumen der in der Milch enthaltenen Luft verfälschtes Milchvolumen gemessen werden. Um mit möglichst hohem Wirkungsgrad die in der Milch enthaltenen Luftblasen zu entfernen, hat man durch konstruktive Gestaltung des Behälters, insbesondere durch einen großen Behälterquerschnitt, dafür gesorgt, daß die Absenkgeschwindigkeit der Milch im Behälter im Vergleich zu der Aufsteiggeschwindigkeit der Luftblasen klein ist. Neben diesen und anderen Sekundärmaßnahmen gegen möglichst wenig Luft in der Milch hat man auch Primärmaßnahmen ergriffen, wie tangential gegensinnig in den Behälter einmündende Doppelrohre, über die die eingeleitete Milch vergleichsweise sanft in den Behälter gelangt.

Der Erfindung liegt die Aufgabe zugrunde, einen Luftabscheider zu schaffen, bei dem das Untermischen von Luft beim Einfüllen der Milch in den Luftabscheider weiter reduziert ist.

Diese Aufgabe wird erfindungsgemäß bei einem Luftabscheider der eingangs genannten Art dadurch gelöst, daß mindestens ein weiterer gegenüber dem einen Einlauf höhenversetzter Einlauf vorgesehen ist und daß sämtliche Einläufe mit Absperrventilen ausgestattet sind, die von einer auf das Milchniveau im Behälter ansprechenden Steuereinrichtung derart gesteuert werden, daß bei ansteigendem Niveau von dem unteren Einlauf auf den nächst höheren Einlauf usw. und bei fallendem Niveau umgekehrt umgeschaltet wird.

Mit dem erfindungsgemäßen Luftabscheider wird den unterschiedlichen sich auf das Milchniveau im Luftabscheider auswirkenden Annahmebedingungen in einer Weise Rechnung getragen, daß bei jedem Niveaustand die Milch mit möglichst geringer kinetischer Energie zu der im Luftabscheider bereits befindlichen Milch gelangt. Ist zu Beginn der Annahme das Niveau niedrig, dann ist der untere Einlauf wirksam, wodurch verhindert wird, daß die Milch über eine große Höhe unter intensiver Beimischung von Luft abstürzt.

Das gleiche gilt für alle höheren Niveaus. Darüber hinaus ist es für die Entfernung der Lufteinschlüsse günstig, daß wegen des zulässigen höheren Milchniveaus der Behälter als Puffer zwischen Einlauf und Auslauf wirkt, so daß die Absenkgeschwindigkeit der Milch im Behälter auch bei größerem zugeführten Milchvolumen vergleichsweise klein gehalten werden kann. Andererseits kann es nicht wie beim Stand der Technik mit einem einzigen Einlauf passieren, daß das Niveau der Milch zu hoch über den Einlauf ansteigt, so daß insbesondere am Ende der Annahme, wenn mit der Milch viel Luft angesaugt wird, die angesaugte Luft die Milch unter intensiver Vermischung durchströmen muß. Wegen des immer oberhalb des Niveaus oder zumindest etwa auf dem Niveau der Milch liegenden wirksamen Einlaufs wird eine starke Vermischung der mitangesaugten Luft mit der bereits im Behälter befindlichen Milch verhindert.

Nach einer Ausgestaltung der Erfindung läßt sich die Dynamik der in den Behälter einströmenden Milch für die Entfernung der Luftblasen aus der Milch dadurch ausnutzen, daß der Behälter im Bereich des oberen tangential einmündenden Einlaufs einen kreiszylindrischen Querschnitt hat, der gegenüber dem Querschnitt im Bereich des unteren Einlaufs wesentlich kleiner ist. Bei dieser Ausgestaltung der Erfindung bewirkt die einströmende Milch eine Rotation der im Behälter befindlichen Milch. Dadurch werden unter Bildung einer mittigen Senke die in der Masse schwereren Milchteilchen nach außen und die in der Masse leichteren Luftblasen nach innen an die Oberfläche gedrängt und damit ausgeschieden. Dieser Vorgang findet in der Hauptannahmephase statt, wenn die Milch mit höchster Förderleistung in den Behälter gefördert wird. Am Ende der Annahme, wenn mit der Milch auch Luft gefördert wird, ist der obere Einlauf nicht mehr wirksam, sondern nur noch der untere Einlauf. Damit in dieser Phase exakt niveauabhängig die Steuereinrichtung ansprechen kann, sollte in dieser Phase das Meßniveau keine Senke aufgrund von rotierender Milch haben. Dies wird dadurch erreicht, daß der untere Einlauf aus zwei tangential gegensinnig einmündenden Teilen besteht.

Im folgenden wird die Erfindung anhand einer zwei Ausführungsbeispiele in Seitenansicht schematisch darstellenden Zeichnung näher erläutert.

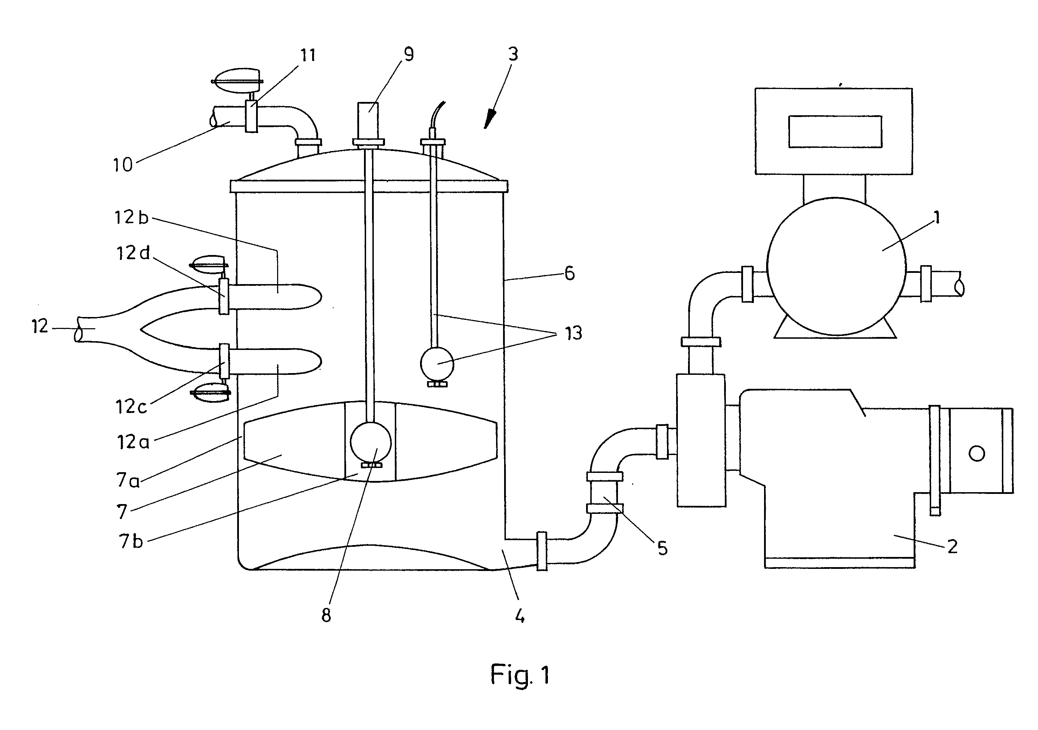

Beim Ausführungsbeispiel der Figur 1 wird einem Zähler 1 einer Meßanlage weitgehend von Lufteinschlüssen befreite Milch mittels einer Pumpe 2 aus einem Luftabscheider 3 über eine vom Boden des Luftabscheiders 3 ausgehende Leitung 4 mit Rückschlagventil 5 zugefördert.

Der Luftabscheider 3 besteht aus einem kreiszylindrischen Behälter 6, in dessen unterer Hälfte ein ringförmiger Verdrängungskörper 7 mit einem äußeren Ringspalt 7a und einer mittigen Öffnung 7b für einen Schwimmer 8 unbeweglich angeordnet ist. Der Schwimmer 8 ist mit einer Niveauanzeige 9 und einer nicht dargestellten Steuereinrichtung verbunden, die die Entleerung des Behälters 6 stoppt, wenn ein vorgegebenes unteres Niveau erreicht wird. Am Kopf des Behälters 6 ist eine Vakuumleitung 10 mit einem Servoventil 11 angeschlossen.

Tangential in den Behälter 6 münden zwei gegeneinander höhenversetzte Einläufe 12a,12b einer Einlaufleitung 12. Zumindest sollte der untere Einlauf 12a als gegenläufiges Doppelrohr ausgebildet sein. Den Einläufen 12a,12b sind Absperrventile 12c,12d zugeordnet. Diese Absperrventile 12c,12d werden von einer nicht dargestellten Steuereinrichtung angesteuert, die ihrerseits von einem Niveaustandsfühler 13 mit einem Magnetschwimmer einen Meßwert über das augenblickliche Milchniveau im Behälter 6 erhält.

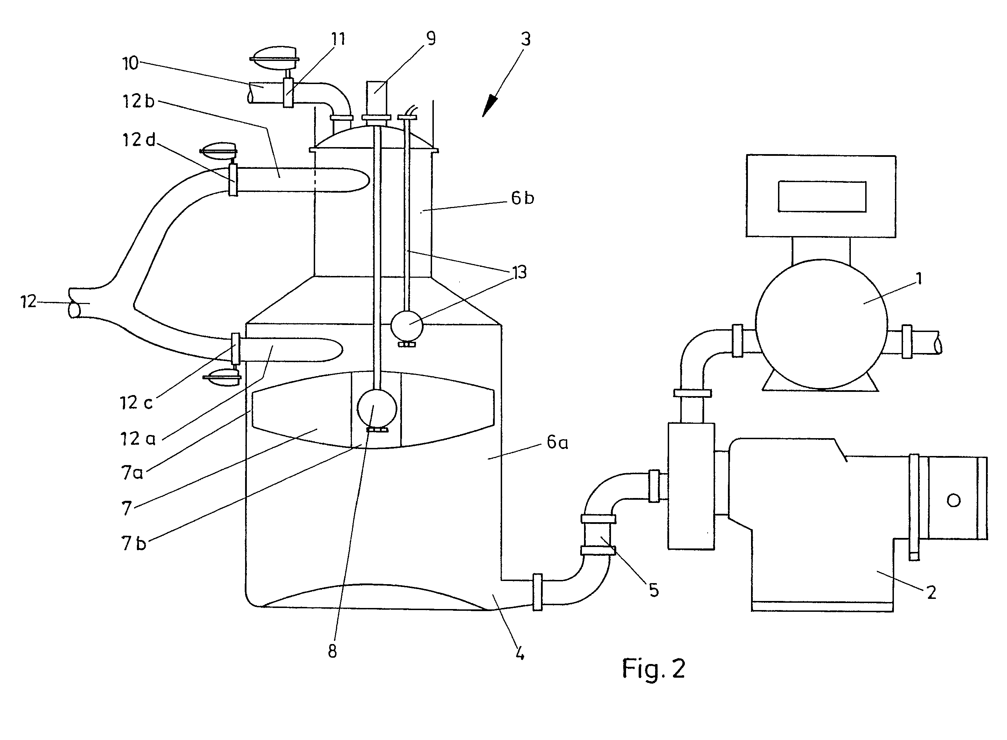

Das Ausführungsbeispiel der Figur 2 unterscheidet sich von dem der Figur 1 nur in der unterschiedlichen Ausbildung des Behälters 6a,6b oberhalb des Verdrängers 7. Deshalb sind für die einander entsprechenden Teile die gleichen Bezugszeichen verwendet. Im Gegensatz zum Ausführungsbeispiel der Figur 1 hat der Behälter 6b im Bereich des oberen Einlaufs 12b einen wesentlich kleineren kreiszylindrischen Querschnitt als beim Ausführungsbeispiel der Figur 1. In diesem Teil des Behälters 6b mündet der Einlauf 12 einfach tangential ein, während der untere Einlauf 12a vorzugsweise doppelt tangential und damit gegensinnig einmündet.

Die Arbeitsweise des Luftabscheiders gemäß den beiden Ausführungsbeispielen ist folgende:

Zu Beginn einer jeden Annahme liegt das Milchniveau im Bereich des Verdrängers 7. Nach Eintauchen des mit dem Einlaufrohr 12 verbundenen, in der Zeichnung aber nicht dargestellten Rüssels in die vom Lieferanten in einem Behälter angelieferte Milch und nach Öffnen des Ventils 11 wird mittels Unterdruck Milch angesaugt. Da die Milch ihr niedrigstes Niveau hat, hat die Steuereinrichtung das Ventil 12c geöffnet, das Ventil 12d aber geschlossen. Die Milch gelangt deshalb mit geringster Fallhöhe zu der bereits im Behälter 6 befindlichen Milch. Während des Zulaufs von Milch in den Behälter 6 kann über die Pumpe 2 schon Milch abgezogen und dem Zähler 1 zugeführt werden. Steigt das Milchniveau weiter an und über das Niveau des Einlaufs 12a, was vom Niveaustandsfühler 13 festgestellt wird, dann schaltet die Steuereinrichtung auf den nächsthöheren Einlauf 12b um, indem das Ventil 12c gesperrt und das Ventil 12d geöffnet wird. Auf diese Art und Weise wird vermieden, daß die weiter zulaufende Milch der im Behälter 6 befindlichen Milch unter deren Niveau beigemischt wird. Erst wenn das Niveau der Milch wieder auf das Niveau des Einlaufs 12a gefallen ist, wird auf den Einlauf 12a zurückgeschaltet. Das Prinzip des Umschaltens vom unteren auf den oberen Einlauf ist bei mehr als zwei Einläufen das gleiche. In jedem Fall sorgt die Steuereinrichtung dafür, daß in keiner Phase der Milchannahme ein Einlauf erheblich unter das Niveau der Milch im Behälter 6 gelangt, wobei von den Einläufen 12a,12b für die Milchförderung immer derjenige ausgewählt wird, der von dem Milchniveau den geringsten Höhenabstand hat.

Beim Ausführungsbeispiel der Figur 2 stellt sich wegen der in einer Richtung tangential in den oberen Teil des Behälters 6b über den Einlauf 12b einströmenden Milch eine Rotation der Milch ein, die dazu führt, daß sich an der Oberfläche der Milch eine Senke 13 bildet. Infolge der auf die Milch und die in der Milch enthaltenen Luftblasen einwirkenden Zentrifugalkraft werden die in der Masse kleineren Luftblasen aus der in der Masse schwereren Milch herausgedrückt. Dieser Effekt ist während der Hauptphase der Milchannahme wirksam, wenn die Milch mit höchster Förderleistung in den Behälter 6a,6b gefördert wird und damit auch die größte die Entfernung von Luftblasen bewirkende Zentrifugalkraft wirksam ist. Sinkt das Milchniveau bis in den Bereich des unteren Einlaufs 12a, dann wird auf dem unteren Einlauf 12a umgeschaltet, der wegen seiner doppelten gegensinnigen Ausführung eine Rotation der Milch verhindert, so daß das Niveau in diesem Bereich im wesentlichen eben ist und damit auch gewährleistet ist, daß der Schwimmer 8 exakt anspricht.

## Patentansprüche

1. Luftabscheider in einer Meßanlage für Milch, insbesondere für einen Milchsammelwagen, bestehend aus einem Behälter (6,6a,6b) und einem weit oberhalb seines Bodens angeordneten Einlauf (12a) und einem zumindest in der Nähe seines Bodens angeordneten Auslauf (4),
**dadurch gekennzeichnet,** daß mindestens ein weiterer, gegenüber dem einen Einlauf (12a) höhenversetzter Einlauf (12b) vorgesehen ist, und daß sämtliche Einläufe (12a,12b) mit Absperrventilen (12c,12d) ausgestattet sind, die von einer auf das Milchniveau im Behälter (6,6a,6b) ansprechenden Steuereinrichtung (13) derart gesteuert werden, daß bei ansteigendem Niveau von dem unteren Einlauf (12a) auf den nächst höheren Einlauf (12b) usw. und bei fallendem Niveau umgekehrt umgeschaltet wird.

2. Luftabscheider nach Anspruch 1,
**dadurch gekennzeichnet,** daß der Behälter (6a,6b) im Bereich des oberen tangential einmündenden Einlaufs (12b) einen kreiszylindrischen Querschnitt hat, der gegenüber dem Querschnitt im Bereich des unteren Einlaufs (12a) wesentlich kleiner ist.

3. Luftabscheider nach Anspruch 1 oder 2, **dadurch gekennzeichnet**, daß der untere Einlauf (12a) aus zwei tangential gegensinnig einmündenden Teilen besteht.

Fig. 1

EP 0 446 606 A2

Fig. 2